# EUROPÄISCHE PATENTSCHRIFT

(11) **EP 3 302 050 B1**
(45) Veröffentlichungstag und Bekanntmachung des Hinweises auf die Patenterteilung: **09.10.2019**
(21) Anmeldenummer: 16724380.7
(22) Anmeldetag: 19.05.2016
(51) Int. Cl.: A01M 7/00, A01M 21/00, A01M 21/02

(54) **UNKRAUTREGULIERUNGSVORRICHTUNG**
WEED CONTROLLING DEVICE
DISPOSITIF DE RÉGULATION DES ADVENTICES

(30) Priorität: 29.05.2015 DE 102015209888
(43) Veröffentlichungstag der Anmeldung: 11.04.2018
(73) Patentinhaber: Robert Bosch GmbH, 70442 Stuttgart (DE)
(72) Erfinder: BOECK, Simon, 70563 Stuttgart (DE); GLUNK, Christian, 71737 Kirchberg An Der Murr (DE); ALBERT, Amos, 71229 Leonberg (DE); MICHAELS, Andreas, 71272 Renningen (DE)
(86) Internationale Anmeldenummer: PCT/EP2016/061176
(87) Internationale Veröffentlichungsnummer: WO 2016/192996

(56) Entgegenhaltungen:
- DE-A1-102013 222 776
- DE-C1- 4 409 805
- FR-A1- 2 603 452
- FR-A1- 2 860 124
- US-A- 5 689 944
- US-A- 5 974 728

## Beschreibung

### Stand der Technik

Die Erfindung betrifft eine Vorrichtung, ein System und ein Verfahren zur Beschädigung von Unkraut.

Die Unkrautregulierung in der Landwirtschaft ist eine sehr arbeitsintensive Aufgabe, besonders im biologischen Anbau, der den Einsatz von Chemikalien verbietet oder einschränkt.

Die DE 4039797 A1 offenbart eine Vorrichtung zur Unkrautregulierung, wobei die Beschädigung des Unkrauts mittels eines Flammaktors beschrieben wird.

Die DE 44 09 805 C1 offenbart ein Verfahren und eine entsprechende Vorrichtung zum dosierten Zerstäuben von Flüssigkeiten, bei dem die Flüssigkeit Druckstößen ausgesetzt wird.

Die FR 2 860 124 offenbart eine Vorrichtung zum Schneiden von Pflanzen, wobei ein Schneideelement waagerecht bewegbar ist.

Die US 5,689,944 offenbart eine Vorrichtung zur Unkrautbekämpfung, wobei ein kontinuierlicher Flüssigkeitsstrahl ausgebracht wird, um das Unkraut zu beschädigen.

Die US 5,974,728 offenbart eine Vorrichtung zur giftfreien Bekämpfung von Insekten und Unkräutern.

### Offenbarung der Erfindung

Gegenstand der vorliegenden Erfindung ist eine Vorrichtung, ein System und ein Verfahren zur Beschädigung von Unkraut gemäß den Hauptansprüchen. Durch die erfindungsgemäße Vorrichtung und das erfindungsgemäße Verfahren ist es nunmehr möglich, eine äußert schnelle, präzise und damit effiziente Unkrautregulierung vorzunehmen. Dies wird insbesondere dadurch erzielt, dass das erfindungsgemäße Stoßelement impulsförmig aktuiert wird, so dass dieses entweder das Unkraut unmittelbar mit einem impulsförmigen Druck beaufschlagt oder aber eine Flüssigkeit, beispielsweise Wasser, mit einem impulsförmigen Druck bzw. Stoß beaufschlagt, so dass die Flüssigkeit impulsförmig an das Unkraut abgegeben wird und dieses beschädigt. D.h., mit anderen Worten, dass die Beschädigung des Unkrauts entweder durch das Stoßelement selbst erfolgt, welches das Unkraut in den Boden presst, oder aber durch die impulsförmig abgegebene Flüssigkeit. Im letzteren Fall erfolgt die Beschädigung des Unkrauts mechanisch aufgrund der kinetischen Energie der impulsförmig abgegebenen Flüssigkeit ("Wasserstrahlschneiden"). Hierfür ist die Aktoreinheit ausgebildet ist, die impulsförmige Druckbeaufschlagung der abzugebenden Flüssigkeit mittels des Stoßelements derart durchzuführen, dass das Unkraut aufgrund der kinetischen Energie der impulsförmigen Flüssigkeit beschädigbar ist. Hierbei kann die Flüssigkeit bei der Abgabe vorzugsweise eine Austrittsgeschwindigkeit von größer oder gleich 60 m/s und/oder eine kinetische Energie von größer oder gleich 0,03 J aufweisen. D.h., mit anderen Worten, das die Flüssigkeit bzw. der gebündelte Flüssigkeitsstrahl, welcher beispielsweise als Wasserstrahl ausgebildet sein kann, eine derart hohe kinetische Energie bei der Abgabe aufweist, dass ein entsprechender mechanischer Zerstörungseffekt bei dem Unkraut, an das er abgegeben wird, hervorgerufen wird. Durch diese Ausgestaltung kann auf sehr einfache und umweltschonende Art und Weise eine Unkrautregulierung erfolgen, wobei auf Chemikalien gänzlich verzichtet werden kann. Im Rahmen dieser Erfindung ist unter einer "impulsfömigen Bewegung" eine stoßförmige, stoßartige bzw. schlagartige Bewegung zu verstehen, durch die ein Kraftimpuls bzw. ein Stoß abgegeben bzw. übertragen werden kann. Vorteilhafterweise erfolgt beim Unkrautregulierungsprozess aufgrund der schnellen impulsförmigen Auslösung des Stoßelements bzw. Abgabe der Flüssigkeit kaum eine Erdbewegung beim Stempelprozess bzw. beim Auftreffen der Flüssigkeit auf das Unkraut, weshalb die Wahrscheinlichkeit für das Aufkeimen weiterer Unkräuter erheblich verringert wird. Ferner ist der Flüssigkeitsbedarf sehr gering, was zu einer umweltschonenden Unkrautregulierung beiträgt.

Durch das erfindungsgemäße System kann äußerst schnell und präzise eine flächendeckende Unkrautregulierung vorgenommen werden, wobei das System menschlich geführt oder autonom ausgebildet sein kann. Da die Auslösung des Stoßelements bzw. die Abgabe der Flüssigkeit impulsförmig erfolgt, kann vorteilhafterweise auf eine Kompensation der Eigenbewegung des Systems in Fahrtrichtung (weitestgehend) verzichtet werden, wodurch die Komplexität des Gesamtsystems erheblich reduziert wird.

Es ist vorteilhaft, wenn das Stoßelement als Stempel oder als Stößel ausgebildet und in einem Führungselement translatorisch bewegbar gelagert ist. Unter dem Begriff "Stempel" ist im Rahmen der vorliegenden Erfindung ein Element zu verstehen, welches ausgebildet ist, Unkraut mechanisch mit einem Druck zu beaufschlagen bzw. in den Boden zu drücken, wodurch einer (benachbarten) Nutzpflanze ein Wachstumsvorsprung ermöglicht wird. Unter dem Begriff "Stößel" ist im Rahmen der vorliegenden Erfindung ein Element zu verstehen, welches ausgebildet ist, effizient einen mechanischen Impuls, z.B. an eine Membran, abzugeben. Durch diese Ausgestaltung des Stoßelements, kann sehr effizient eine impulsförmige Druckbeaufschlagung auf das Unkraut bzw. Impulsübertragung von dem Stoßelement an die abzugebende Flüssigkeit erfolgen.
Die Rückstellung des Stoßelements auf die Anfangsposition kann grundsätzlich mittels einer Feder erfolgen. Es ist jedoch jegliche, dem Fachmann bekannte Vorrichtung denkbar, welche zur Rückstellung des Stoßelements geeignet ist.

Vorteilhaft ist es auch, wenn die Aktoreinheit eine Kupplung und/oder eine Spule zur Kraftübertragung auf das Stoßelement aufweist. Durch eine Kupplung kann gezielt über Reib-/Kraftschluss Energie auf das Stoßelement übertragen werden, so dass dieses eine lineare Bewegung ausführt. Das Stoßelement weist hierbei vorzugsweise eine verhältnismäßig geringe Masse auf, so dass die Energieübertragung zu einer impulsförmigen Bewegung bzw. Beschleunigung desselben führt. Eine Möglichkeit die Kupplung auszulösen besteht in einen magnetischen Aktor, welcher durch ein elektrisches Signal aktiviert wird und schnell die Kupplung betätigt. Eine weitere Möglichkeit besteht in der Verwendung von Piezoaktoren. Hierbei ist eine schnelle Betätigung der Kupplung notwendig, vorzugsweiseweise für eine Dauer von größer oder gleich 20ms bis kleiner oder gleich 30ms, so dass eine impulsförmige Energieübertragung resultiert. Alternativ kann auch eine Spule zur Kraftübertragung vorgesehen sein, bei der beispielsweise durch einen Schalter eine schnelle Entladung und damit eine Übertragung der elektrischen Ladung an die Spule erfolgt. Vorzugsweise kann die Aktoreinheit hierbei als Wirbelstromaktor ausgebildet sein. Im letzteren Fall, erzeugt die Spule ein magnetisches Feld. Um nun eine Kraftübertragung zu erzielen, weist das Stoßelement vorzugsweise einen elektrisch leitfähigen Teil auf, welcher insbesondere als Scheibe, vorzugsweise als Kupferscheibe ausgebildet sein kann, an dem durch das magnetische Feld der Spule Wirbelströme erzeugt werden. Die Wirbelströme erzeugen selbst ein Magnetfeld, welches dem ursprünglichen Magnetfeld (in Folge des Stromflusses in der Spule) entgegengerichtet ist. Hierdurch entsteht eine abstoßende Kraft zwischen den beiden Magnetfeldern und bewirkt eine Beschleunigung bzw. impulsförmige Bewegung der Kupferscheibe bzw. des Stoßelements. Mit je stärkerem Strom die Spule bestromt wird, desto höher ist die Amplitude der Stoßwelle bzw. Druckwelle. D.h., dass mit je stärkerem Strom die Spule bestromt wird, desto höher auch die erzeugte Beschleunigung auf das Stoßelement ist, welches als Stempel fungiert oder auf die Membran trifft und damit die Flüssigkeit beschleunigt (Stoßwelleninjektor). Eine Erhöhung der Amplitude der Druckwelle kann zu einer Erhöhung der Austrittsgeschwindigkeit der Flüssigkeit führen. Durch diese Maßnahme kann auf sehr einfache und robuste Art und Weise mit nahezu verschleißfreien Komponenten die impulsförmige Bewegung des Stoßelements realisiert werden.

Des Weiteren ist es vorteilhaft, wenn eine Flüssigkeitsabgabeeinheit vorgesehen ist, welche eine Kammer zur Aufnahme der abzugebenden Flüssigkeit, eine Membran zur Impulsübertragung bzw. Kraftimpulsübertragung und ein Ventil zur dosierten Abgabe der Flüssigkeit aufweist, wobei das Stoßelement bzw. der Stößel ausgebildet ist, über die Membran eine Stoßwelle bzw. Druckwelle auf die Flüssigkeit zu übertragen. Hierbei ist es vorteilhaft, wenn die Flüssigkeitsabgabeeinheit als eine Art Stoßwelleninjektor ausgebildet ist. D.h., mit anderen Worten, dass das impulsförmig bewegte Stoßelement dazu verwendet wird, über eine Membran einen Impuls bzw. Stoß an die Flüssigkeit in einer Kammer zu übertragen und dadurch eine Stoßwelle in der Flüssigkeit zu erzeugen. Die Kammer kann bevorzugt austauschbar angeordnet sein, sodass die Kammer mit der Flüssigkeit neu befüllt oder aber durch eine neue befüllte Kammer ausgetauscht werden kann. Die Membran kann eine elastisch verformbare Membran sein, welche dazu ausgebildet ist, eine einer Verformung der Membran durch das Stoßelement entgegenwirkende Kraft auszuüben. Somit kann beispielsweise das Verkleinern des Volumens der Kammer durch ein impulsförmiges Bewegen oder Drücken des Stoßelements gegen die Membran derart erfolgen, dass die Membran in Richtung des Inneren der Kammer, insbesondere impulsförmig bzw. stoßartig, ausgebeult wird. Optional kann die Membran auch derart ausgebildet sein, dass sie aufgrund Ihrer Elastizität die Rückstellkraft für die Rückführung des Stoßelements bereitstellt, so dass sobald die das Stoßelement bewegende Kraft der Aktoreinheit erlischt, das Stoßelement in seine ursprüngliche Position zurückgeschoben wird . Mit anderen Worten kann die Membran nicht nur zur Übertragung des Kraftimpulses des Stoßelements an die Flüssigkeit in der Kammer sondern auch zur Rückstellung des Stoßelements verwendet werden. Sobald die Stoßwelle das Ventil erreicht, erfolgt ein gerichteter Masseaustrag der Flüssigkeit an das zu beschädigende Unkraut, ähnlich wie bei einer Spritze. Das Stoßelement kann auch fest mit der Membran verbunden sein. Die Membran kann hierbei auch Teil der Kammer sein bzw. als ein Wandteil der Kammer ausgebildet sein. Die Flüssigkeitsabgabeeinheit kann auch einen Heiz- und/oder Kühlvorrichtung aufweisen, um die Flüssigkeit auf eine gewünschte Temperatur zu bringen. Durch diese Maßnahme kann eine definierte Menge von der Flüssigkeit pro "Schuss" abgegeben und in die richtige bzw. gewünschte Position effektiv eingebracht werden, so dass ein unnötiger Flüssigkeitsverbrauch vermieden wird. Somit kann eine Beschädigung des Unkrauts mit einer sehr geringen Flüssigkeitsmenge und einem kleinen Energiebedarf durchgeführt werden, was zusätzlich zu einer umweltschonenden Unkrautbekämpfung beiträgt. Ferner ermöglicht dies auch den Einsatz bzw. die Applikation auf bspw. energieautarken Systemen (Rasenmäher usw.).

Es ist ferner vorteilhaft, wenn die Flüssigkeitsabgabeeinheit eine Düse, insbesondere mit einer veränderbaren Düsenöffnung aufweist. Durch diese Ausgestaltung kann ein stark gebündelter bzw. fokussierter Flüssigkeitsstrahl erzeugt werden, welcher eine hohe kinetische Energie und damit eine hohe Beschädigungswirkung bzw. einen hohen Zerstörungseffekt aufweist. Durch diese Maßnahme kann somit die schädigende Wirkung an dem Unkraut durch die kinetische Energie der abgegebenen Flüssigkeit erzielt werden.

Des Weiteren ist es vorteilhaft, wenn die Aktoreinheit ein Schwungrad und/oder einen Kondensator und/oder einen Gasspeicher zur Energiespeicherung aufweist. Das Schwungrad kann beispielsweise mit einer konstanten Drehzahl betrieben werden. Über die Kupplung kann dann gezielt die darin gespeicherte rotatorische Energie entzogen werden (Energie ist proportional zur Massenträgheit und zum Quadrat der Drehzahl) und in eine translatorische Energie des Stoßelements übertragen werden. Alternativ kann die Energiespeicherung auch über zumindest einen Kondensator (elektrische Ladung) erfolgen, welcher sich über einen Schalter an zumindest einer Spule entlädt und somit ein magnetisches Feld erzeugt wird. Ohne den Rahmen der vorliegenden Erfindung zu verlassen ist es jedoch auch denkbar, die Speicherung der Energie durch pneumatische bzw. hydraulische Baugruppen mit impulsförmiger Auslösung des mechanischen Stempels durch Ventilöffnung zu realisieren (Prinzip eines Druckluft-Naglers). Durch diese Maßnahme kann einfach und kostengünstig Energie in der Aktoreinheit bzw. der Vorrichtung gespeichert und auf effiziente Art und Weise umgewandelt werden.

Vorteilhaft ist auch ein System mit einer vorangehend beschriebenen erfindungsgemäßen Vorrichtung, welche ferner eine Detektionseinheit aufweist, welche ausgebildet ist, das Unkraut zu detektieren und eine Steuereinheit, welche ausgebildet ist, die Vorrichtung in Abhängigkeit von von der Detektionseinheit ermittelten Daten derart anzusteuern, dass bei einer Betätigung der Vorrichtung eine impulsförmige Druckbeaufschlagung des Unkrauts oder eine impulsförmige Abgabe der Flüssigkeit an das Unkraut erfolgt, um dieses zu beschädigen. Demnach kann bei einem derartigen System die Vorrichtung bzw. das Stoßelement mittels bildbasierter Regelung exakt positioniert werden, so dass äußerst schnell und präzise eine (voll-)autonome Unkrautregulierung vorgenommen werden kann. Dies wird u.a. dadurch erzielt, dass - im Abkehr von bekannten Verfahren - nicht die Nutzpflanze, sondern vielmehr das zu bekämpfende Unkraut selbst spezifisch erkannt und gezielt beschädigt wird, wobei die Unkrautregulierungsvorrichtung, d.h. das Stoßelement bzw. die Düse automatisiert unmittelbar an das Unkraut positioniert wird. Insbesondere in Kulturen mit kleinen Pflanzabständen (z.B. Karotten) ist es durch die vorliegende Erfindung möglich, das unerwünschte Unkraut in unmittelbarer Nähe zur Nutzpflanze in einem sehr frühen Stadium zu beschädigen bzw. abzutöten.

### Zeichnungen

Die Erfindung wird nachstehend anhand der beigefügten Zeichnungen beispielhaft näher erläutert. Es zeigen:
- Figur 1: eine schematische Darstellung einer erfindungsgemäßen Unkrautregulierungsvorrichtung;
- Figur 2a: eine schematische Darstellung einer weiteren Ausgestaltung der erfindungsgemäßen Unkrautregulierungsvorrichtung;
- Figur 2b: eine schematische Darstellung der erzeugten Magnetfelder in der Unkrautregulierungsvorrichtung gemäß Figur 2a;
- Figur 3: eine schematische Darstellung einer weiteren Ausgestaltung der erfindungsgemäßen Unkrautregulierungsvorrichtung, bei der eine Flüssigkeit impulsförmig abgegeben wird;
- Figur 4: eine schematische Darstellung einer Ausgestaltung der Vorrichtung mit einer variablen Düse; und
- Figur 5: eine schematische Darstellung eines erfindungsgemäßen Systems aufweisend die erfindungsgemäße Unkrautregulierungsvorrichtung gemäß 2a.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

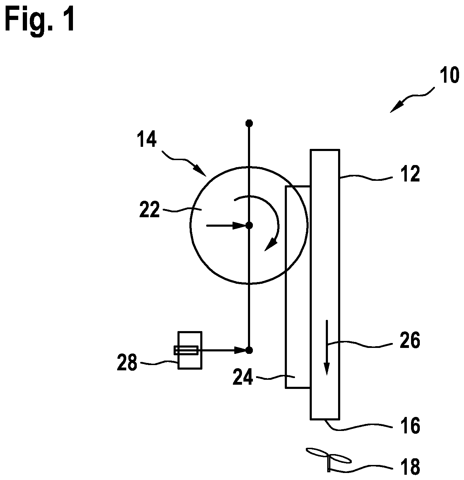

In Fig. 1 ist eine erfindungsgemäße Unkrautregulierungsvorrichtung bzw. Vorrichtung zur Beschädigung von Unkraut dargestellt, welche in ihrer Gesamtheit mit der Bezugsziffer 10 versehen ist.

Die Unkrautregulierungsvorrichtung 10 weist ein Stoßelement 12 und eine Aktoreinheit 14 auf. Das Stoßelement 12 ist hierbei als Stempel 12 ausgebildet. Das Stoßelement 12 weist eine längliche Form auf. Das Stoßelement 12 weist ferner ein Stoßelementende 16 auf, welches in seiner Form und Stabilität ausgebildet ist, ein Unkraut 18 zu beschädigen. Das Stoßelementende 16 kann hierbei an das zu beschädigende Unkraut 18 und die Nutzpflanze angepasst sein, so dass eine maximale Beschädigungswirkung an dem Unkraut 18 erzielt und dabei eine Beschädigung der Nutzpflanze verhindert werden kann.

Die Aktoreinheit 14 weist ein Schwungrad 22 zur Energiespeicherung auf. D.h., mit anderen Worten, dass der Aufbau und die Speicherung der Energie mittels einer rotierenden Schwungmasse erfolgt. Das Schwungrad 22 kann hierbei beispielsweise mit einer konstanten Drehzahl betrieben werden.

Um nun die gespeicherte Energie auf das Stoßelement 12 bzw. den Stempel 12 zu übertragen, weist die Aktoreinheit 14 ferner eine Kupplung 24 auf. Über die Kupplung 24 kann gezielt die im Schwungrad 22 gespeicherte Energie über Reib-/Kraftschluss auf das Stoßelement 12 übertragen werden, so dass das Stoßelement 12 seinerseits eine lineare Bewegung in einer Stoßrichtung 26 ausführen kann. Mit anderen Worten, wird dem Schwungrad 22 rotatorische Energie entzogen (Energie ist proportional zur Massenträgheit und zum Quadrat der Drehzahl) und in eine translatorische Energie des Stoßelements 12 übertragen. Aufgrund der verhältnismäßig geringen Masse des Stoßelements 12, führt dieses eine impulsförmige Bewegung aus. Durch die impulsförmige Bewegung des Stoßelements 12, welche durch die Aktoreinheit 14 angeregt wird, kann das Unkraut 18 durch eine impulsförmige Druckbeaufschlagung effizient und umweltschonend beschädigt werden (Naglerprinzip).

Die Auslösung der Kupplung 24 erfolgt hierbei mittels einer Aktivierungseinheit 28, welche einen magnetischen Aktor umfasst. Der magnetische Aktor wird durch ein elektrisches Signal aktiviert, so dass die Kupplung schnell betätigt werden kann. Anstatt des magnetischen Aktors ist es jedoch auch denkbar, einen Piezoaktor zu verwenden. Wichtig ist lediglich eine schnelle Betätigung der Kupplung 24, so dass eine impulsförmige Energieübertragung und damit eine impulsförmige Bewegung des Stoßelements 12 realisiert werden kann. Vorzugsweise sollte die Betätigung für eine Dauer von größer oder gleich 20ms bis kleiner oder gleich 30ms erfolgen.

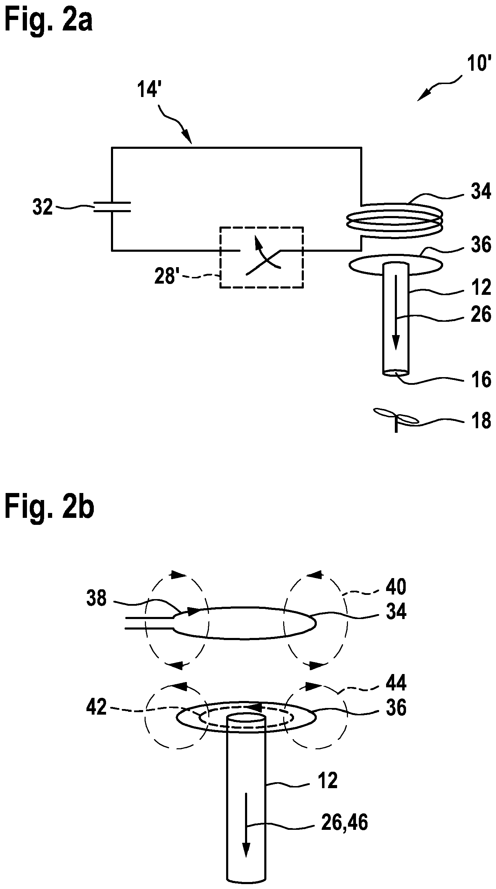

In Fig. 2a ist ein weiteres erfindungsgemäßes Ausführungsbeispiel einer Unkrautregulierungsvorrichtung 10' bzw. Vorrichtung 10' zur Beschädigung von Unkraut 18 gezeigt. Analog zu dem in Fig. 1 gezeigten Ausführungsbeispiel erfolgt auch bei der Unkrautregulierungsvorrichtung 10' die Beschädigung des Unkrauts 18 durch unmittelbare impulsförmige Druckbeaufschlagung mittels des Stoßelements 12. Im Gegensatz zu der Vorrichtung 10', ist die Aktoreinheit 14' jedoch als Wirbelstromaktor 14' ausgebildet.

Die Aktoreinheit 14' weist demnach einen Kondensator 32 zur Energiespeicherung auf, wobei auch mehrere Kondensator 32 denkbar sind. Mittels der Aktivierungseinheit 28', welche im gezeigten Ausführungsbeispiel als Schalter 28' ausgebildet ist, kann die im Kondensator 32 gespeicherte elektrische Ladung schnell entladen werden. Zur Kraftübertragung weist die als Wirbelstromaktor 14' ausgebildete Aktoreinheit 14' eine Spule 34 auf. Demnach kann bei Aktivierung des Schalters 28' die elektrische Ladung vom Kondensator 32 an die Spule 34 übertragen werden, wodurch aufgrund magnetischer Kräfte eine Beschleunigung des Stoßelementes 12 in die Stoßrichtung 26 erzeugt wird. Für diese Kraftübertragung weist das Stoßelement 12 einen elektrisch leitfähigen Teil 36 auf. Im gezeigten Ausführungsbeispiel ist der elektrisch leitfähige Teil 36 als Kupferscheibe 36 ausgebildet. Das Prinzip und die wirkenden Kräfte werden nachfolgend anhand von Fig. 2b näher erläutert.

In Fig. 2b ist das Stoßelement 12 mit der Kupferscheibe 36 gezeigt. Um nun eine Beschleunigung bzw. Stoßwirkung des Stoßelements 12 zu erzielen, erfolgt eine elektrische Entladung und damit eine Energieübertragung von dem (hier nicht dargestellten) Kondensator 32 auf die Spule 34, wodurch ein Stromfluss 38 an der Spule 34 erzeugt wird. Durch die fließend elektrische Ladung entsteht ein erstes magnetisches Feld 40. In dem elektrisch leitfähigen Teil 36 bzw. der Kupferscheibe 36 wird hierdurch wiederum ein Wirbelstromfluss 42 erzeugt. Der Wirbelstromfluss 42 bzw. die entstehenden Wirbelströme erzeugen selbst ein zweites Magnetfeld 44, das dem ersten Magnetfeld 40 (infolge des Stromflusses 38 in der Spule 34) entgegengerichtet ist. Demnach entsteht eine abstoßende Kraft 46 zwischen dem ersten Magnetfeld 40 und dem zweiten Magnetfeld 44, welche eine Beschleunigung bzw. impulsförmige Bewegung der Kupferscheibe 36 und damit des Stoßelements 12 in Stoßrichtung 26 bewirkt. Der elektrisch leitfähige Teil 36 des Stoßelementes 12 ist einerseits elektrisch leitfähig ausgeführt, andererseits in der Lage, die entstehenden Wirbelströme aufzunehmen, um die zuvor beschriebenen Umwandlung von elektrischer in mechanischer Energie zu ermöglichen.

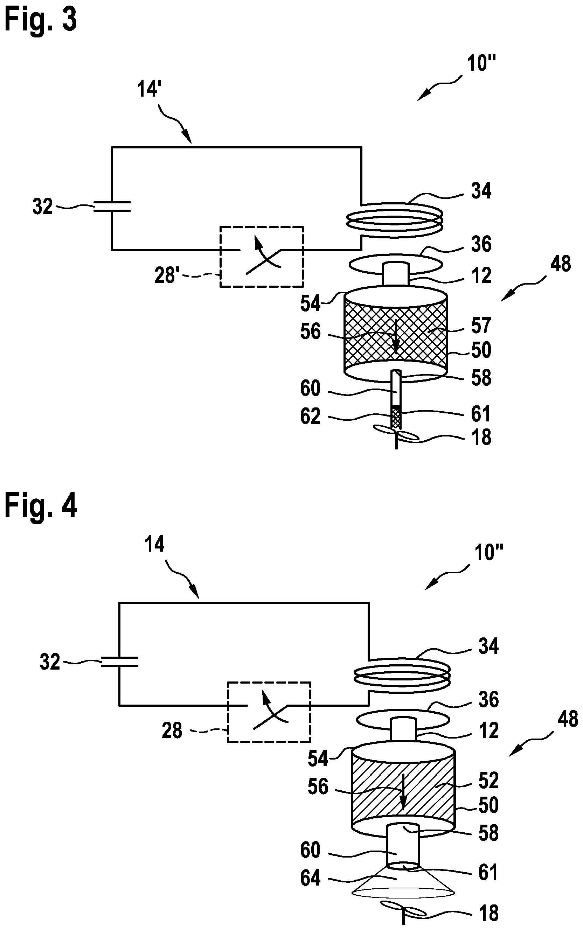

In Fig. 3 ist eine weitere Ausführungsform einer erfindungsgemäßen Unkrautregulierungsvorrichtung 10" gezeigt. Die Aktoreinheit 14' entspricht der Aktoreinheit 14' der Unkrautregulierungsvorrichtung 10' aus Fig. 2a, weshalb auf eine nähere Beschreibung verzichtet wird. Im Gegensatz zu der Unkrautregulierungsvorrichtung 10' weist die gezeigte Unkrautregulierungsvorrichtung 10" eine Flüssigkeitsabgabeeinheit 48 auf, welche als eine Art Stoßwelleninjektor 48 ausgebildet ist. Die Flüssigkeitsabgabeeinheit 48 weist eine Kammer 50, eine Membran 54 und ein Ventil 58 auf. Die Kammer 50 weist eine Flüssigkeit 52 auf, welche beispielsweise Wasser, aber je nach Anwendung bspw. auch ein Unkrautvernichtungsmittel sein oder aufweisen kann. An der Kammer 50 ist die Membran 54 angeordnet, welche zusammen mit der Kammer 50 die Flüssigkeit 52 umschließt. Die Membran 54 ist zwischen dem Stoßelement 12 und der Kammer 52 angeordnet. Durch diese Anordnung kann nun bei Betätigung des Wirbelstromaktors 14' das Stoßelement 12, welches hierbei als Stößel 12 ausgebildet ist, gegen die Membran 54 stoßen und die Stoß-/Impulsergie auf die Flüssigkeit 52 übertragen, so dass eine Stoßwelle in Stoßwellenrichtung 56 erzeugt wird. Die Stoßwelle breitet sich dann in Stoßwellenrichtung 56 entlang der Kammer 50 bis zu dem Ventil 58 aus. Sobald die Stoßwelle das Ventil 58 erreicht, erfolgt ein gerichteter Masseaustrag der Flüssigkeit 52 aus der Kammer 50. Mittels einer Düse 60, welche an dem Ventil 58 angeordnet ist, kann ein gebündelter bzw. fokussierter Flüssigkeitsstrahl 62 erzeugt werden, welcher aus einer Düsenöffnung 61 der Düse 60 austreten kann. Durch die im Flüssigkeitsstrahl 62 enthaltene kinetische Energie kann dann das Unkraut 18 beschädigt werden, wobei aufgrund der impulsförmigen Abgabe nur eine sehr geringe Flüssigkeitsmenge benötigt wird.

Zusammenfassend erfolgt durch die kurzzeitige impulsförmige Druckbeaufschlagung der Membran 54 mittels des Stoßelements 12 bzw. Stößels 12 auf sehr einfache Art und Weise eine Energieübertragung auf die Flüssigkeit 52, in der eine Stoßwelle angeregt wird. Hierdurch wird eine definierte Menge von der Flüssigkeit pro Stoß bzw. "Schuss" abgegeben, welche in die gewünschte Position effektiv eingebracht wird, so dass ein unnötiger Flüssigkeitsverbrauch vermieden wird.

Die in Fig. 4 gezeigte Ausführungsform der Unkrautregulierungsvorrichtung 10" ist analog zu der in Fig. 3 gezeigten Vorrichtung 10" aufgebaut. Der einzige Unterschied besteht darin, dass die Düse 60 eine veränderbare Düsenöffnung 61 aufweist. D.h. mit anderen Worten, dass die Düsenöffnung 61 variabel ausgebildet ist, so dass sich unterschiedliche Ausströmcharakteristiken sowie Größen der Bearbeitungsfläche erzielen lassen. Wie in Fig. 4 gezeigt, lässt sich somit ein konischer Flüssigkeitsstrahl 64 erzeugen, durch den das Unkraut 18 flächig besprüht werden kann. Die schädigende Wirkung ist hierbei nicht die kinetische Energie der ausströmenden Flüssigkeit 52 bzw. des Flüssigkeitsstrahls 64, sondern die (chemische) Eigenschaft der Flüssigkeit 52 an sich. Demzufolge kann die Flüssigkeit 52 beispielsweise als Unkrautvernichtungsmittel ausgebildet sein. Auch in dieser Ausgestaltung besteht jedoch der große Vorteil, dass nur eine definierte Menge von der Flüssigkeit pro Stoß bzw. "Schuss" abgegeben wird, welche in die gewünschte Position bzw. über die gewünschte Bearbeitungsfläche effektiv eingebracht wird, so dass ein unnötiger Flüssigkeitsverbrauch vermieden wird.

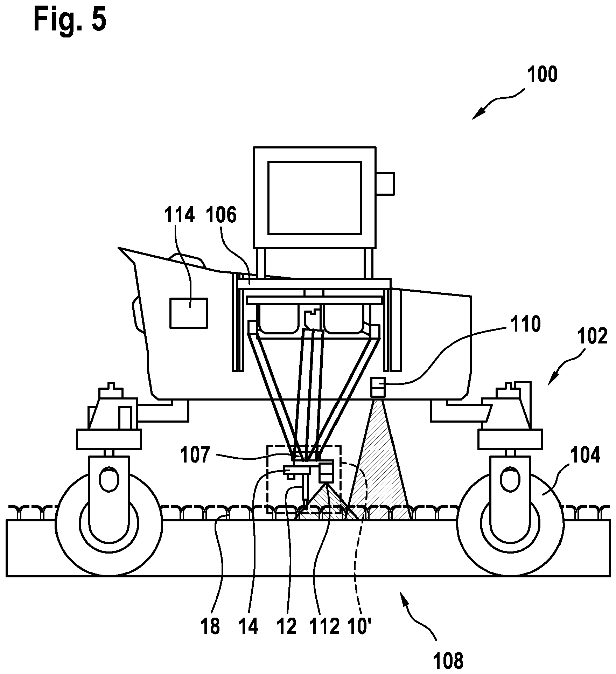

In Fig. 5 ist ein erfindungsgemäßes System zur Beschädigung von Unkraut 18 dargestellt, welches in seiner Gesamtheit mit der Bezugsziffer 100 versehen ist.

Das System 100 weist eine erfindungsgemäße Unkrautregulierugsvorrichtung 10' bzw. eine Vorrichtung 10' zur Beschädigung von Unkraut 18 gemäß der vorangehend beschriebenen Ausführungsform aus Fig. 2a auf. Es ist jedoch eine beliebige erfindungsgemäße Unkrautregulierungsvorrichtung 10; 10'; 10" an dem System 100 montierbar. Das System 100 ist als mobile Plattform ausgebildet. Hierfür weist das System 100 eine Antriebseinheit 102 mit Rädern 104 auf. Es ist jedoch jegliche, dem Fachmann bekannte Antriebsart denkbar, welche dem System 100 eine Mobilität verschaffen kann.

Das System 100 weist ferner eine Manipulatoreinheit 106 auf, an deren unterem Manipulatorabschnitt 107 die Vorrichtung 10' angeordnet ist. Wie vorangehend erläutert, weist die Vorrichtung 10' erfindungsgemäß die Aktoreinheit 14' auf, welche das Stoßelement 12 impulsförmig bewegen kann. Das Stoßelement 12 ist hierbei zwischen der Manipulatoreinheit 106 und dem Boden angeordnet und weist in Richtung des Unkrauts 18. Um nun eine bildpassierte Regelung zur exakten Positionierung der Vorrichtung 10' bzw. des Stoßelements 12 zu ermöglichen, weist das System 100 ferner eine Detektionseinheit 108 und eine Steuereinheit 114 auf. Die Detektionseinheit 108 weist eine Klassifizierungseinheit 110 und eine Lokalisierungseinheit 112 auf.

Hierbei ist die Klassifizierungseinheit 110 als bildgebendes System in Form einer Kameraeinheit 110 ausgeführt. Die Lokalisierungseinheit 112 ist als Visual-Servoing-Kamera 112 ausgeführt und dem unteren Manipulatorabschnitt 107 der Manipulatoreinheit 106 neben dem Stoßelement 12 angeordnet. Demzufolge ist die Visual-Servoing-Kamera 112 über dem Boden "schwebend" angeordnet und wird dementsprechend zusammen mit dem Stoßelement 12 bewegt bzw. positioniert. Durch diese Anordnung kann die Lokalisierungseinheit 112 bzw. die Visual-Servoing-Kamera 112 in unmittelbarer Nähe zu dem Unkraut 18 äußerst präzise die Relativpositionen des Stoßelements 12 zu dem Unkraut 18 ermittelt. Die Lokalisierungseinheit 112 ermittelt basierend auf den Positionsdaten bzw. den Erkennungsdaten der Klassifizierungseinheit 112 die Relativposition, vorzugsweise mittels einer (nicht gezeigten) Rechnereinheit.
Ohne den Rahmen der vorliegenden Erfindung zu verlassen, ist es jedoch durchaus auch denkbar, dass die Klassifizierungseinheit 110 und die Lokalisierungseinheit 112 als eine Einheit ausgebildet sind. Demnach würde die Einheit 110, 112 umfassend die Klassifizierungseinheit 110 und die Lokalisierungseinheit 112 eine Doppelaufgabe erfüllen, nämlich die vorangehend beschriebene Klassifikationsaufgabe (Erkennung des Unkrauts 18) und die Ermittlung der Relativpositionen des Stoßelements 12 zu dem Unkraut 18 (visual servoing), welche zur Führung des Stoßelements 12 dient.

Die Steuereinheit 114 empfängt die ermittelten Daten der Detektionseinheit 108 bzw. der Lokalisierungseinheit 112 und steuert entsprechend die Manipulatoreinheit 106 und die Aktoreinheit 14' so an, dass das Stoßelement 12 in eine entsprechende Position gebracht und das Stoßelement zu einem bestimmten Zeitpunkt bzw. bei Erreichen einer bestimmten Position aktiviert wird, um durch eine impulsförmige Auslösung das Unkraut 18 durch Druckbeaufschlagung zu beschädigen bzw. zu vernichten. Bei Verwendung der Flüssigkeit 52 zur Beschädigung des Unkrauts 18, würde analog die Düse 60 in eine entsprechende Position gebracht werden, um durch eine impulsförmige Auslösung das Unkraut 18 durch den Flüssigkeitsstrahl 62 zu beschädigen bzw. zu vernichten.

## Patentansprüche

1. Vorrichtung zur Beschädigung von Unkraut (18) mit einer Aktoreinheit (14; 14') aufweisend ein Stoßelement (12), welches durch die Aktoreinheit (14; 14') impulsförmig bewegbar ist,
- um das Unkraut (18) durch impulsförmige Druckbeaufschlagung zu beschädigen, wobei das Stoßelement (12) ausgebildet ist, das Unkraut (18) in den Boden zu pressen, oder
- um eine Flüssigkeit (52) durch impulsförmige Druckbeaufschlagung impulsförmig an das Unkraut (18) abzugeben, um dieses zu beschädigen, wobei die Aktoreinheit (14') ausgebildet ist, die impulsförmige Druckbeaufschlagung der abzugebenden Flüssigkeit (52) mittels des Stoßelements (12) derart durchzuführen, dass das Unkraut (18) aufgrund der kinetischen Energie der impulsförmig abgegebenen Flüssigkeit (52) beschädigbar ist.

2. Vorrichtung (10; 10'; 10") nach Anspruch 1, **dadurch gekennzeichnet, dass** das Stoßelement (12) als Stempel (12) oder als Stößel (12) ausgebildet und in einem Führungselement translatorisch bewegbar gelagert ist.

3. Vorrichtung (10; 10'; 10") nach Anspruch 1 oder 2, **dadurch gekennzeichnet, dass** die Aktoreinheit (14; 14') eine Kupplung (24) und/oder eine Spule (34) zur Kraftübertragung auf das Stoßelement (12) aufweist.

4. Vorrichtung (10'; 10") nach einem der vorhergehenden Ansprüche, **dadurch gekennzeichnet, dass** die Aktoreinheit (14') als Wirbelstromaktor (14') ausgebildet ist.

5. Vorrichtung (10") nach Anspruch 4, **dadurch gekennzeichnet, dass** die Flüssigkeit (52) bei der Abgabe eine eine Austrittsgeschwindigkeit von größer oder gleich 60 m/s und eine kinetische Energie von größer oder gleich 0,03 J aufweist.

6. Vorrichtung (10") nach einem der vorhergehenden Ansprüche, **dadurch gekennzeichnet, dass** eine Flüssigkeitsabgabeeinheit (48) vorgesehen ist, welche eine Kammer (50) zur Aufnahme der abzugebenden Flüssigkeit (52), eine Membran (54) zur Impulsübertragung und ein Ventil (58) zur dosierten Abgabe der Flüssigkeit (52) aufweist, wobei das Stoßelement (12) ausgebildet ist, über die Membran (54) eine Stoßwelle auf die Flüssigkeit (54) zu übertragen.

7. Vorrichtung (10") nach Anspruch 6, **dadurch gekennzeichnet, dass** die Flüssigkeitsabgabeeinheit (48) als eine Art Stoßwelleninjektor (48) ausgebildet ist.

8. Vorrichtung (10") nach Anspruch 6 oder 7, **dadurch gekennzeichnet, dass** die Flüssigkeitsabgabeeinheit (48) eine Düse (60), insbesondere mit einer veränderbaren Düsenöffnung (61) aufweist.

9. Vorrichtung (10; 10'; 10") nach einem der vorhergehenden Ansprüche, **dadurch gekennzeichnet, dass** die Aktoreinheit (14; 14') zumindest ein Schwungrad (22) und/oder zumindest einen Kondensator (32) und/oder zumindest einen Gasspeicher zur Energiespeicherung aufweist.

10. System (100) zur Beschädigung von Unkraut (18) mit einer Vorrichtung (10; 10'; 10") zur Beschädigung von Unkraut (18) nach einem der vorhergehenden Ansprüche.

11. System (100) nach Anspruch 10, **gekennzeichnet durch** eine Detektionseinheit (108), welche ausgebildet ist, das Unkraut (18) zu detektieren und eine Steuereinheit (114), welche ausgebildet ist, die Vorrichtung (10; 10', 10") in Abhängigkeit von von der Detektionseinheit (108) ermittelten Daten derart anzusteuern, dass bei einer Betätigung der Vorrichtung (10; 10'; 10") eine impulsförmige Druckbeaufschlagung des Unkrauts (18) oder eine impulsförmige Abgabe der Flüssigkeit (52) an das Unkraut (18) erfolgt, um dieses zu beschädigen.

12. Verfahren zur Beschädigung von Unkraut (18) mit folgenden Schritten:
- Bereitstellen einer Aktoreinheit (14; 14') aufweisend ein Stoßelement (12), welches durch die Aktoreinheit (14; 14') impulsförmig bewegbar ist, und
- Impulsförmiges Druckbeaufschlagen des Unkrauts (18) mittels des Stoßelements (12), wobei das Stoßelement (12) das Unkraut (18) in den Boden presst, oder impulsförmiges Druckbeaufschlagen einer Flüssigkeit (52) mittels des Stoßelements (12) derart, dass die Flüssigkeit (52) impulsförmig an das Unkraut (18) abgegeben wird.

13. Verwendung einer impuisförmig abgegebenen Flüssigkeit (52) zur Beschädigung eines Unkrauts (18), wobei die Beschädigung des Unkrauts (18) aufgrund der kinetischen Energie der Flüssigkeit (52) erfolgt.

## Claims

1. Device for damaging weeds (18), having an actuator unit (14; 14') having a shock element (12) which by way of the actuator unit (14; 14') is movable in a pulsed manner
- so as to by an impingement with pressure in a pulsed manner damage the weed (18), wherein the shock element (12) is configured for pressing the weed (18) into the soil; or
- so as to by an impingement with pressure in a pulsed manner dispense a liquid (52) to the weed (18) in a pulsed manner so as to damage the latter, wherein the actuator unit (14') by means of the shock element (12) is configured for carrying out the impingement with pressure in a pulsed manner of the liquid (52) to be dispensed in such a manner that the weed (18) is capable of being damaged by virtue of the kinetic energy of the liquid (52) dispensed in a pulsed manner.

2. Device (10; 10'; 10") according to Claim 1, **characterized in that** the shock element (12) is configured as a ram (12) or as a tappet (12) and is mounted so as to be movable in a translatory manner in a guiding element.

3. Device (10; 10'; 10") according to Claim 1 or 2, **characterized in that** the actuator unit (14; 14') has a coupling (24) and/or a coil (34) for transmitting force to the shock element (12).

4. Device (10'; 10") according to one of the preceding claims, **characterized in that** the actuator unit (14') is configured as an eddy current actuator (14').

5. Device (10") according to Claim 4, **characterized in that** the liquid (52) when dispensing has an exit velocity of more than or equal to 60 m/s and a kinetic energy of more than or equal to 0.03 J.

6. Device (10") according to one of the preceding claims, **characterized in that** a liquid-dispensing unit (48) which has a chamber (50) for receiving the liquid (52) to be dispensed, a membrane (54) for transmitting a pulse, and a valve (58) for the metered dispensing of the liquid (52) is provided, wherein the shock element (12) is configured for transmitting a shock wave to the liquid (54) by way of the membrane (54).

7. Device (10") according to Claim 6, **characterized in that** the liquid-dispensing unit (48) is configured as a type of shock-wave injector (48).

8. Device (10") according to Claim 6 or 7, **characterized in that** the liquid-dispensing unit (48) has a nozzle (60) having in particular a variable nozzle opening (61).

9. Device (10; 10'; 10") according to one of the preceding claims, **characterized in that** the actuator unit (14; 14') for storing energy has at least one flywheel (22) and/or at least one capacitor (32) and/or at least one gas reservoir.

10. System (100) for damaging weeds (18), having a device (10; 10'; 10") for damaging weeds (18) according to one of the preceding claims.

11. System (100) according to Claim 10, **characterized by** a detection unit (108) which is configured for detecting the weed (18), and a control unit (114) which is configured for actuating the device (10; 10'; 10") as a function of the data determined by the detection unit (108) in such a manner that, when activating the device (10; 10'; 10"), an impingement of the weed (18) with pressure in a pulsed manner or dispensing the liquid (52) to the weed (18) in a pulsed manner is performed so as to damage the latter.

12. Method for damaging weeds (18), comprising the following steps:
- providing an actuator unit (14; 14') having a shock element (12) which by the actuator unit (14; 14') is movable in a pulsed manner; and
- impinging the weed (18) with pressure in a pulsed manner by means of the shock element (12), wherein the shock element (12) presses the weed (18) into the soil, or impinging a liquid (52) with pressure in a pulsed manner by means of the shock element (12) in such a manner that the liquid (52) is dispensed to the weed (18) in a pulsed manner.

13. Use of a liquid (52) dispensed in a pulsed manner for damaging a weed (18), wherein the damage to the weed (18) is performed by virtue of the kinetic energy of the liquid (52).

## Revendications

1. Dispositif destiné à détériorer des adventices (18) avec une unité d'actionneur (14 ; 14') comportant un élément d'impact (12), lequel peut être déplacé sous forme d'impulsions par l'unité d'actionneur (14 ; 14'),
- pour détériorer les adventices (18) par application de pression sous forme d'impulsions, sachant que l'élément d'impact (12) est constitué pour comprimer les adventices (18) dans le sol, ou
- pour délivrer par impulsions un liquide (52) par application de pression aux adventices (18) sous forme d'impulsions pour détériorer celles-ci, sachant que l'unité d'actionneur (14') est constituée pour exécuter l'application de pression sous forme d'impulsions du liquide à distribuer (52) au moyen de l'élément d'impact (12) de telle manière que les adventices (18) peuvent être détériorées sur la base de l'énergie cinétique du liquide (52) distribué par impulsions.

2. Dispositif (10 ; 10' ; 10") selon la revendication 1, **caractérisé en ce que** l'élément d'impact (12) est constitué comme un poinçon (12) ou comme un poussoir (12) et est logé de manière à pouvoir être mobile de façon translatoire dans un élément de guidage.

3. Dispositif (10 ; 10' ; 10") selon la revendication 1 ou 2, **caractérisé en ce que** l'unité d'actionneur (14 ; 14') comporte un accouplement (24) et/ou une bobine (34) pour la transmission de force à l'élément d'impact (12).

4. Dispositif (10' ; 10") selon l'une quelconque des revendications précédentes, **caractérisé en ce que** l'unité d'actionneur (14') est constituée comme un actionneur à courants de Foucault (14').

5. Dispositif (10") selon la revendication 4, **caractérisé en ce que** lors de la distribution, le liquide (52) comporte une vitesse de sortie supérieure ou égale à 60 m/s et une énergie cinétique supérieure ou égale à 0,03 J.

6. Dispositif (10") selon l'une quelconque des revendications précédentes, **caractérisé en ce qu'**une unité distributrice de liquide (48) est prévue, laquelle comporte une chambre (50) destinée à recevoir le liquide à distribuer (52), une membrane (54) pour la transmission d'impulsions et une soupape (58) pour la distribution dosée du liquide (52), sachant que l'élément d'impact (12) est constitué pour transmettre une onde de choc au liquide (54) par le biais de la membrane (54).

7. Dispositif (10") selon la revendication 6, **caractérisé en ce que** l'unité distributrice de liquide (48) est constituée sous la forme d'un injecteur à onde de choc (48).

8. Dispositif (10") selon la revendication 6 ou 7, **caractérisé en ce que** l'unité distributrice de liquide (48) comporte une buse (60), dotée notamment d'un orifice de buse (61) variable.

9. Dispositif (10 ; 10' ; 10") selon l'une quelconque des revendications précédentes, **caractérisé en ce que** l'unité d'actionneur (14 ; 14') comporte au moins un volant (22) et/ou au moins un condensateur (32) et/ou au moins un accumulateur de gaz pour l'accumulation d'énergie.

10. Système (100) destiné à détériorer les adventices (18) avec un dispositif (10 ; 10' ; 10") pour détériorer des adventices (18) selon l'une quelconque des revendications précédentes.

11. Système (100) selon la revendication 10 **caractérisé par** une unité de détection (108), laquelle est constituée pour détecter les adventices (18) et une unité de commande (114), laquelle est constituée pour piloter le dispositif (10 ; 10' ; 10") en fonction des données déterminées par l'unité de détection (108) de telle manière qu'en actionnant le dispositif (10 ; 10' ; 10") une application de pression aux adventices (18) sous forme d'impulsions ou une distribution du liquide (52) aux adventices (18) sous forme d'impulsions a lieu pour détériorer celles-ci.

12. Procédé destiné à détériorer des adventices (18) avec les étapes suivantes :
- mise à disposition d'une unité d'actionneur (14 ; 14') comportant un élément d'impact (12), lequel peut être déplacé sous forme d'impulsions par l'unité d'actionneur (14 ; 14'), et
- application de pression aux adventices (18) sous forme d'impulsions au moyen de l'élément d'impact (12), sachant que l'élément d'impact (12) comprime les adventices (18) dans le sol ou application de pression sous forme d'impulsions d'un liquide (52) au moyen de l'élément d'impact (12) de telle manière que le liquide (52) est délivré sous forme d'impulsions aux adventices (18).

13. Utilisation d'un liquide (52) délivré sous forme d'impulsions pour détériorer une adventice (18), sachant que la détérioration de l'adventice (18) a lieu sur la base de l'énergie cinétique du liquide (52) .
